# EUROPEAN PATENT SPECIFICATION

(11) **EP 1 025 339 B1**
(45) Date of publication and mention of the grant of the patent: **06.08.2003**
(21) Application number: 98954415.0
(22) Date of filing: 14.10.1998
(51) Int. Cl.: E21D 11/10, G05B 11/30

(54) **AUTOMATIC CONTROL SYSTEM FOR A CONCRETE DISTRIBUTING PIPE IN TUNNEL LINING**
AUTOMATISCHES STEUERUNGSSYSTEM FÜR BETONVERTEILERRÖHREN IN TUNNELAUSKLEIDUNG
SYSTEME DE COMMANDE AUTOMATIQUE POUR CONDUIT DE DISTRIBUTION DE BETON POUR REVETEMENT DE TUNNEL

(30) Priority: 15.10.1997 IT MI972328
(43) Date of publication of application: 09.08.2000
(73) Proprietor: Cifa S.P.A., 20026 Novate Milanese, Milano (IT)
(72) Inventor: ARPINI, Roberto, I-22070 Rovello Porro (IT); MORETTI, Giorgio, I-21040 Gerenzano (IT)
(74) Representative: Vatti, Paolo, Dr. Ing.
(86) International application number: EP9806517
(87) International publication number: WO99019604

(56) References cited:
- DE-A- 2 822 995
- FR-A- 2 353 336
- FR-A- 2 401 452
- US-A- 4 448 821
- US-A- 5 443 800
- PATENT ABSTRACTS OF JAPAN vol. 008, no. 001 (P-246), 6 January 1984 & JP 58 167906 A (TOBISHIMA KENSETSU KK;OTHERS: 01), 4 October 1983
- PATENT ABSTRACTS OF JAPAN vol. 012, no. 398 (C-538), 21 October 1988 & JP 63 141674 A (HAZAMA GUMI LTD), 14 June 1988
- PATENT ABSTRACTS OF JAPAN vol. 012, no. 156 (P-701), 13 May 1988 & JP 62 273438 A (MITSUI ENG & SHIPBUILD CO LTD;OTHERS: 01), 27 November 1987

## Description

The present invention relates to a system for automatically moving the end pipe of the arm supplying fluid concrete mixes and air in machines for lining tunnel vaults and the like, intended to improve the working conditions in tunnels, freeing the operators of the need to perform continuous repetitive manual operations for said movement, thus leaving them free to concentrate on other, more demanding operations.

Machines with articulated arms for spraying fluid concrete mixes and air (shotcrete) onto the vaults of tunnel excavations (using the so-called "spritz beton" method), in order to stabilise or directly line the tunnel, are known and widely used in the building sector, see for example FR 2 353 336 A.

In these machines the articulated arm is provided, at its operating end, with a spraying pipe which is able to perform cyclical controlled oscillating movements both in the vertical plane (vertical traversing) and in the horizontal plane (horizontal traversing) from a starting position, whereby both the starting position and amplitude of the traversing movements of the pipe may be modified.

At present, control of the pipe movements is carried out by the operator who performs said control manually by means of electrohydraulic actuators. This control is continuous and repetitive and therefore demanding and tiring; moreover, it is not easy to perform in a precise manner and, when it is not performed properly (as inevitably tends to happen at least occasionally) it may give rise to an undesirable lack of uniformity in the lining obtained; therefore, the advantage which would be gained by automating said operation is apparent.

The object of the present invention is precisely to provide this automatic system, thus facilitating the task of the operator and improving the reliability and the work quality.

For this purpose the present invention envisages controlling the electrohydraulic actuators for the pipe movements by sending to them electrical commands in the form of square-wave signals with a variable frequency and in appropriate sequences, one signal being provided for each type of desired movement.

Preferably, at least three signals are provided: the first signal which controls the vertical traversing movements, the second signal which controls the horizontal traversing movements, and the third signal which controls both the said movements in a predetermined combination.

Also preferably, the signals used are simple square-wave signals which are sent to the solenoids of solenoid valves of said electrohydraulic actuators.

So as not to shift unintentionally the starting position of the pipe during its movements, it is envisaged that the first wave of said signals should have a period equal to half the period of the subsequent waves.

In order to vary the amplitude of the pipe movements, the frequency of the said signals is varied.

The system is provided using a PLC which generates the necessary sequences of output signals, allowing the frequency and the sequence thereof to be varied on the basis of incoming commands effected by the operator via a remote control device.

The invention is now described in greater detail with reference to the accompanying drawings in which:
Fig. 1 shows a diagram of the movement system according to the invention;
Fig. 2 shows the sequence of signals for obtaining vertical traversing or horizontal traversing of the pipe separately; and
Fig. 3 shows the sequence of signals for obtaining a combined traversing movement of the said pipe.

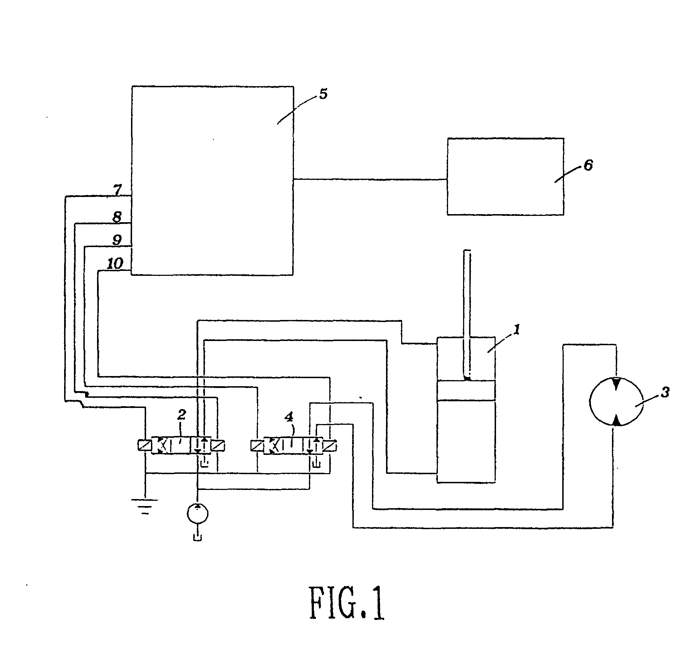

As it is known, the movement of the end pipe of the arm for supplying fluid concrete mixes and air (shotcrete) in machines for lining tunnel vaults and the like is obtained in a known manner by means of electrohydraulic actuators. More precisely, with reference to Fig. 1 of the drawings, these actuators comprise, in the system according to the invention, a cylinder-and-piston unit 1 controlled by a solenoid valve 2 for performing the vertical traversing movements of the pipe, while the horizontal traversing movements of the pipe itself are obtained by means of a rotary actuator 3, controlled by a solenoid valve 4.

According to the invention, the solenoid valves 2 and 4 - in addition to being able to be operated manually, as in the known art - are controlled in an automated manner.

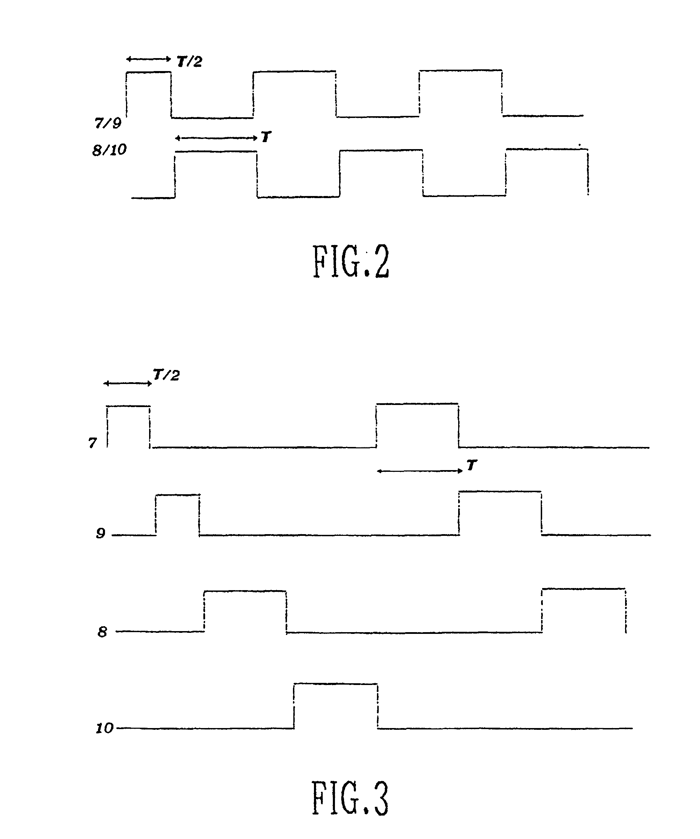

For this purpose, a PLC 5, which is controlled by the operator by means of a remote control device 6, sends, by means of outputs 7, 8, 9 and 10, square-wave signals to the said solenoid valves 2 and 4. In order to obtain vertical traversing, pairs of square-wave signals, such as those shown in Fig. 2, are sent to the two solenoids of the solenoid valves 2 from the outputs 7 and 9; in order to obtain horizontal traversing, pairs of square-wave signals, such as those shown in Fig. 2, are also sent to the two solenoids of the solenoid valve 4, from the outputs 8 and 10; on the other hand, a more complex combined movement of vertical and horizontal traversing is obtained by sending to the solenoid valves 2 and 4 the two pairs of signals according to Fig. 3 from four outputs 7 to 10, the pipe in this case describing substantially a square shape.

All these signals have a period T which may be varied by the operator via the remote control device 6, the first pulse of which must have a period T/2, if it is required to avoid displacement of the starting position of the pipe movements.

## Claims

1. System for performing automatic movement of the end pipe of the arm supplying fluid concrete mixes and air in machines for lining tunnel vaults and the like, **characterised in that** electrohydraulic actuators for the movements of the pipe are controlled by sending to them electrical commands in the form of square-wave signals with a variable frequency and in appropriate sequences, a signal being provided for each type of desired movement.

2. System as claimed in Claim 1, wherein at least three signals are provided: the first signal which controls the vertical traversing movements of the pipe, the second signal which controls its horizontal traversing movements, and the third signal which controls both the said movements of the pipe in a predetermined combination.

3. System as claimed in Claims 1 and 2, wherein the signals used are simple square-wave signals which are sent to the solenoids of solenoid valves of said electrohydraulic actuators.

4. System as claimed in Claims 1 to 3, wherein, so as not to shift unintentionally the starting position of the pipe during its movements, the first wave of said signals has a period equal to half the period of the subsequent waves.

5. System as claimed in Claims 1 to 4, wherein the frequency of the said signals is varied in order to vary the amplitude of the pipe movements.

6. System as claimed in Claims 1 to 5, carried out using a PLC which generates the necessary sequences of square-wave signals output therefrom, allowing the frequency and the sequence thereof to be varied on the basis of incoming commands effected by the operator via a remote control device.

## Patentansprüche

1. System zur Durchführung einer automatischen Bewegung des Endrohres des Flüssigbetonmischungen und Luft liefernden Armes in Maschinen zur Auskleidung von Tunneln, Gewölben und dergleichen, **dadurch gekennzeichnet, daß** elektrohydraulische Aktuatoren für die Bewegungen des Rohres gesteuert werden, indem elektrische Befehle in Form von Rechtecksignalen mit einer variablen Frequenz und in geeigneten Sequenzen an sie gesendet werden, wobei ein Signal für jeden Typ von gewünschter Bewegung bereitgestellt wird.

2. System nach Anspruch 1, **dadurch gekennzeichnet, daß** mindestens drei Signale bereitgestellt werden: das erste Signal, das die vertikalen Querbewegungen des Rohres steuert, das zweite Signal, das seine horizontalen Querbewegungen steuert, und das dritte Signal, das beide besagten Bewegungen des Rohres in einer vorab festgelegten Kombination steuert.

3. System nach Anspruch 1 und 2, **dadurch gekennzeichnet, daß** die verwendeten Signale einfache Rechtecksignale sind, die an Solenoide von Magnetventilen der elektrohydraulischen Aktuatoren gesendet werden.

4. System nach einem der Ansprüche 1 bis 3, **dadurch gekennzeichnet, daß** die erste Welle der Signale eine Periode aufweist, die der halben Periode der nachfolgenden Wellen gleicht, um die Startposition des Rohres während seiner Bewegungen nicht unabsichtlich zu verschieben.

5. System nach einem der Ansprüche 1 bis 4, **dadurch gekennzeichnet, daß** die Frequenz der Signale variiert wird, um die Amplitude der Rohrbewegungen zu variieren.

6. System nach einem der Ansprüche 1 bis 5, unter Verwendung eines PLC durchgeführt, der die notwendigen Sequenzen von Rechtecksignalausgaben davon erzeugt, wobei deren Frequenz und Sequenz auf der Grundlage von eintreffenden Befehlen, die von dem Bediener über eine Fernsteuereinrichtung bewirkt werden, variierbar sind.

## Revendications

1. Système pour effectuer un mouvement automatique du conduit d'extrémité du bras d'amenée de mélanges de béton fluides et d'air dans des machines pour le revêtement de voûtes de tunnels et analogues, **caractérisé en ce qu'**on commande des actionneurs hydrauliques pour les mouvements du conduit en leur envoyant des ordres électriques sous la forme de signaux à ondes carrées de fréquence variable et en séquences appropriées, un signal étant prévu pour chaque type de mouvement souhaité.

2. Système selon la revendication 1, dans lequel au moins trois signaux sont prévus : le premier signal qui commande les mouvements de déplacement vertical du conduit, le deuxième signal qui commande ces mouvements de déplacement horizontal et le troisième signal qui commande l'ensemble desdits mouvements du conduit dans une combinaison prédéterminée.

3. Système selon les revendications 1 et 2, dans lequel les signaux utilisés sont des signaux à ondes carrées simples qui sont envoyés aux bobines d'électrovannes desdits actionneurs électro-hydrauliques.

4. Système selon les revendications 1 à 3, dans lequel la première onde desdits signaux a une période égale à la moitié de la période des ondes suivantes afin de ne pas décaler involontairement la position de départ du conduit pendant ses mouvements.

5. Système selon les revendications 1 à 4, dans lequel on fait varier la fréquence desdits signaux pour faire varier l'amplitude des mouvements du conduit.

6. Système selon les revendications 1 à 5, mis en oeuvre en utilisant un PLC qui génère les séquences nécessaires de signaux à ondes carrées qui en sont délivrées en sortie, permettant d'en faire varier la fréquence et la séquence sur la base d'ordres arrivants appliqués par l'opérateur au moyen d'un dispositif de commande à distance.
